# EUROPEAN PATENT APPLICATION

(11) **EP 4 737 910 A1**
(43) Date of publication of application: **06.05.2026**
(21) Application number: 24831782.8
(22) Date of filing: 19.06.2024
(51) Int. Cl.: G01N 35/10

(54) **AUTOMATIC ANALYSIS DEVICE**

(30) Priority: 30.06.2023 JP 2023107615
(71) Applicant: HITACHI HIGH-TECH CORPORATION, Tokyo 105-6409 (JP)
(72) Inventor: TANAKA, Shinya, Tokyo 105-6409 (JP); FUNAHASHI, Ryosuke, Tokyo 105-6409 (JP); NISHIGAKI, Kenichi, Tokyo 105-6409 (JP)
(74) Representative: MERH-IP Matias Erny Reichl Hoffmann Patentanwälte PartG mbB
(86) International application number: PCT/JP2024/022174
(87) International publication number: WO 2025/004920

(57) **Abstract**

There is provided an automatic analyzer that is capable of avoiding the occurrence of analysis failures due to a shortage of the remaining amount of a liquid by directly acquiring the remaining amount of the liquid in a vessel.

For the purpose of the above, an automatic analyzer includes a probe that aspirates a liquid in a vessel, and an electrostatic capacitance measuring mechanism that measures an electrostatic capacitance across the probe and the liquid housed in the vessel. In the automatic analyzer, the automatic analyzer includes a liquid amount calculation unit that calculates an amount of the liquid based on an electrostatic capacitance value measured by the electrostatic capacitance measuring mechanism when the probe contacts the liquid housed in the vessel.

## Description

### Technical Field

This invention relates to an automatic analyzer.

### Background Art

In an automatic analyzer used for clinical examination, for examination of a sample for a plurality of different analysis items, a dispensing probe is used to dispense the sample from a single sample vessel into a plurality of different reaction vessels corresponding to the number of analysis items. Many of used sample vessels have a test-tube shape with a vessel bottom of hemispherical shape. Because of this, when the remaining amount of the sample becomes not more than a certain amount after repeated aspirations of the sample, even if the sample remains, the sample will not be aspirated with the probe (the remaining amount of the sample at the time is referred to as dead volume). If a desired amount of the sample is not able to be aspirated, the analysis could result in failure because of no occurrence of normal reaction.

To avoid the problem, it is helpful to aspirate the sample after the confirmation that the sample to be aspirated is still present in the sample vessel. Patent Literature 1 discloses an automatic analyzer that determines that a liquid is present in a sample vessel by using an electrostatic capacitance scheme to detect that the tip end of the probe contacts a liquid level in the vessel.

### Citation List

### Patent Literature

Patent Literature 1: Japanese Unexamined Patent Application Publication No. Hei10(1998)-282116

### Summary of Invention

### Technical Problem

In the technology described in Patent Literature 1, by detecting a liquid level, the presence of a liquid in the vessel is detected. However, it is impossible to acquire directly how much the liquid remains in the vessel. In other words, the liquid level height is not able to be calculated from "the relationship between the liquid level height and the remaining amount of the sample" calculated based on a shape of the sample vessel.

The acquisition of an accurate remaining amount of the sample is important especially when the remaining amount is close to dead volume. This is because, even though an analyzable sample remains, if a shortage of the remaining amount is determined, a precious sample will be wasted. On the other hand, even if it is determined that the remaining amount is sufficient, when the actually dispensed sample is insufficient, an analysis failure will occur and a reagent will be wasted.

It is an object of the present invention to provide an automatic analyzer capable of avoiding the occurrence of analysis failures due to a shortage of the remaining amount of a liquid by directly acquiring the remaining amount of the liquid in a vessel.

### Solution to Problem

To solve the above problem, the configuration of the present invention is as follows.
An automatic analyzer includes: a probe that aspirates a liquid in a vessel; and an electrostatic capacitance measuring mechanism that measures electrostatic capacitance across the probe and the liquid housed in the vessel. The automatic analyzer includes a liquid amount calculation mechanism that calculates an amount of the liquid based on an electrostatic capacitance value measured by the electrostatic capacitance measuring mechanism when the probe contacts the liquid housed in the vessel.

### Advantageous Effects of Invention

According to the present invention, an automatic analyzer is provided which is capable of avoiding the occurrence of analysis failures due to a shortage of the remaining amount of a liquid by directly acquiring the remaining amount of the liquid in a vessel.

### Brief Description of Drawings

[FIG. 1] FIG. 1 is a plan view showing the overall configuration of an automatic analyzer.
[FIG. 2] FIG. 2 is a schematic diagram of a dispensing probe and an electrostatic capacitance produced between the dispensing probe and an electrode opposite to the dispensing probe.
[FIG. 3] FIG. 3 is a functional block diagram of the automatic analyzer.
[FIG. 4] FIG. 4 shows a change in the electrostatic capacitance when the dispensing probe is lowered.
[FIG. 5] FIG. 5 shows a relationship between the electrostatic capacitance mean value after contacting a liquid and the liquid amount when sample aspiration is repeated.
[FIG. 6] FIG. 6 is a flowchart of determining the remaining amount of a sample from the electrostatic capacitance.

### Description of Embodiments

Embodiments of the present invention will be described below with reference to the accompanying drawings. The following description presents specific examples of the subject matter of the invention, and the present invention is not limited to these descriptions. Thus, those skilled in the art can make various changes and modifications within the scope of the technical concept disclosed herein. In all of the drawings for describing the present invention, identical reference signs are used to indicate elements with identical functions, and repeated description thereof may be omitted in some cases.

### First Embodiment

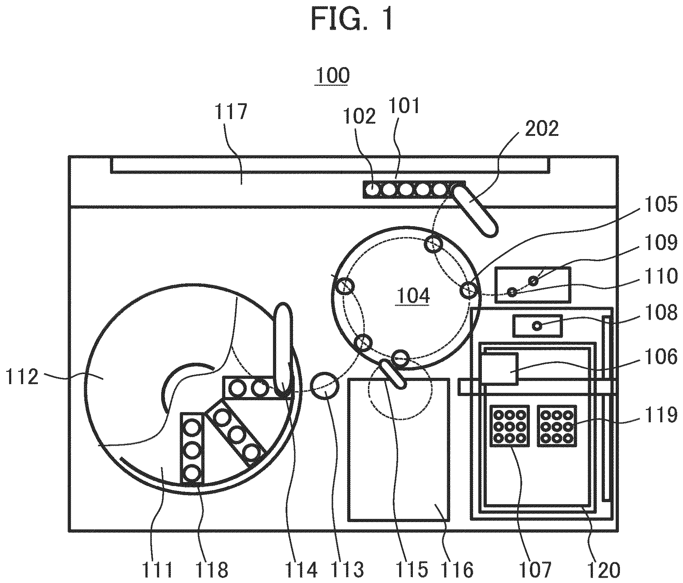

FIG. 1 shows an overview of an automatic analyzer 100.
A probe 203 is able to rotate in horizontal plane and move vertically so as to aspirate a predetermined amount of the sample housed in a sample vessel 102. After aspirating the sample and then moving to above an incubator (reaction disk) 104, the probe is lowered to discharge the sample into an unused reaction vessel 105 held in the incubator 104.

The probe 114 (reagent dispensing probe) is also immersed in a reagent in a reagent vessel 118 housed in a reagent disk 111 in order to aspirate a predetermined amount of the reagent. Then, the probe 114 moves up, then rotates, and then moves to above a predetermined position of the incubator 104 to discharge the reagent into the reaction vessel 105 into which the sample has been discharged. The foregoing is typical operation of the automatic analyzer 100.

A liquid-level detection using a typical electrostatic capacitance scheme, which is mounted in the automatic analyzer, is to detect contact between the tip end of the probe and a liquid level from a change in electrostatic capacitance across the probe and an electrode installed in a position opposite to the probe. When the probe tip end is out of contact with the liquid level, air above the liquid level is present between the probe and the opposite electrode. The relative permittivity of air is lower than that of liquid. Therefore, the electrostatic capacitance is small when the liquid level and the probe tip end are out of contact. Upon contact between the liquid level and the probe tip end, air disappears. Thus, the electrostatic capacitance increases abruptly stepwise. Based on the stepwise changes of the electrostatic capacitance, the contact of the probe tip end with the liquid level is able to be detected. In this case, observation is carried out on changes in electrostatic capacitance, rather than on electrostatic capacitance value itself.

Subsequently, an example of the embodiments is provided. In this embodiment, it provides an example where the remaining amount of the sample is determined in a cylindrical sample vessel with a hemispherical shaped bottom like a test tube.

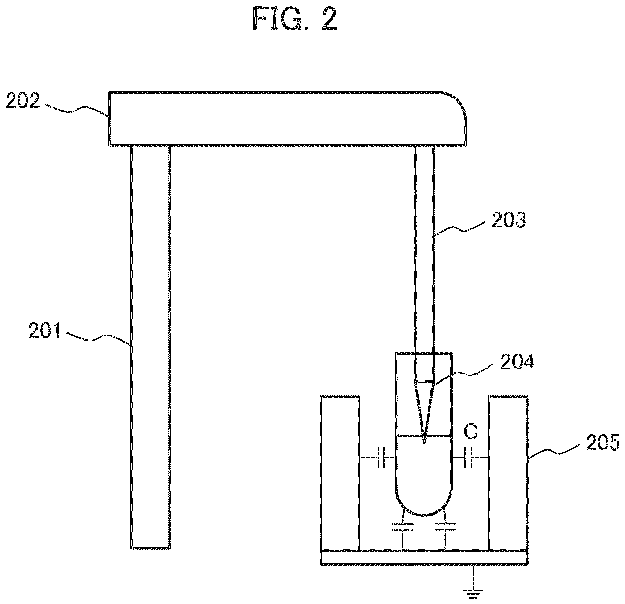

FIG. 2 is a diagram showing a typical liquid dispensing mechanism. In the figure, the schematic diagram represents electrostatic capacitance between the probe 203 and an electrode (ground electrode) 205 placed opposite to the prove in question.

In the electrostatic capacitance scheme, the contact of the probe tip end with liquid is detected by use of abrupt changes of the electrostatic capacitance between the probe tip end 204 (of a structure with metal exposed at the tip end for functioning as an electrode) and the electrode 205 opposite to it, before and after the contact with liquid as described earlier.

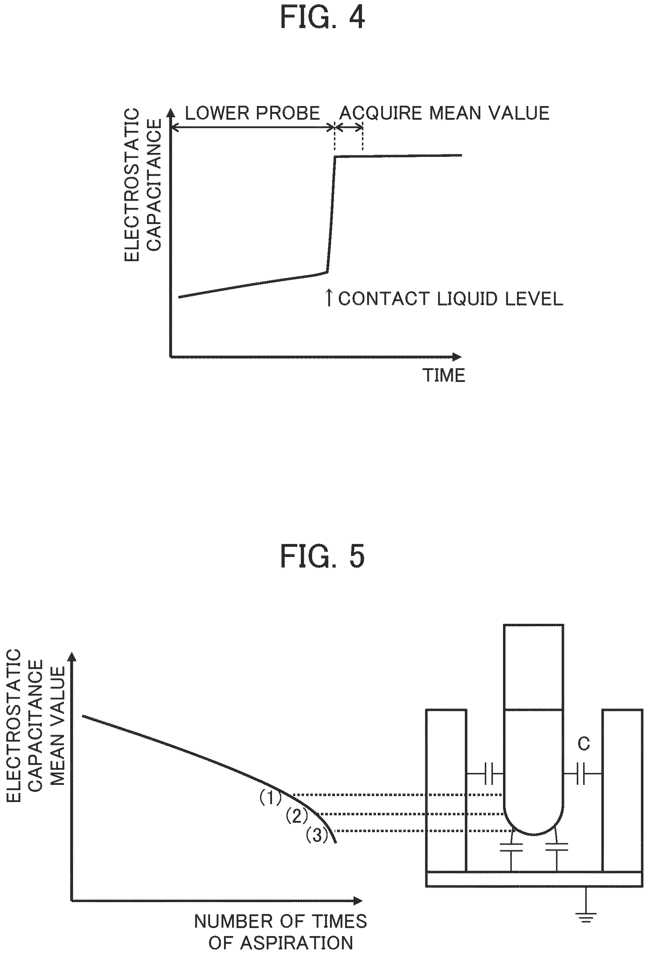

FIG. 4 is a graph showing a change in electrostatic capacitance when the probe is lowered and the probe tip end (electrostatic capacitance detecting unit) contacts a liquid level surface. It is seen that a stepwise change of the electrostatic capacitance occurs when the probe is lowered to allow the probe tip end to contact the liquid level. The conventional technologies have focused only on the stepwise changes for the purpose of the detection of liquid level. The present invention focuses on an electrostatic capacitance value itself, in particular, an electrostatic capacitance value flattening out after the contact of the probe with the liquid level.

The electrostatic capacitance after the electrostatic capacitance detecting unit contacts liquid depends on the amount of the liquid remaining in the vessel. After the liquid level detection, the dispensing probe is stopped at a few millimeters below the liquid level to start liquid aspiration. Because the liquid level becomes lowered as the liquid is aspirated, the aspiration is typically performed while the probe tip end is being lowered to follow the liquid level lowered.

This is for the purpose of avoiding the liquid from adhering to a probe side face. If the liquid remains on the probe side face, when the subsequent, different liquid is aspirated, the different liquids may be mixed together to influence the measurement results (typically referred to as contamination). The probe is cleaned every time aspiration is performed, but there is no denying the possibility that even slight contamination may influence the analysis results because of recent progress of analytical technology.

During liquid aspiration, the dispensing probe is lowered to follow the liquid level, and the amount of the liquid is decreased. Because of this, the electrostatic capacitance after the contact with the liquid level monotonically decreases slightly. After the probe tip end contacts the liquid level, the electrostatic capacitance is measured for a certain period of time (the order of several hundred milliseconds), and a mean value of them is calculated.

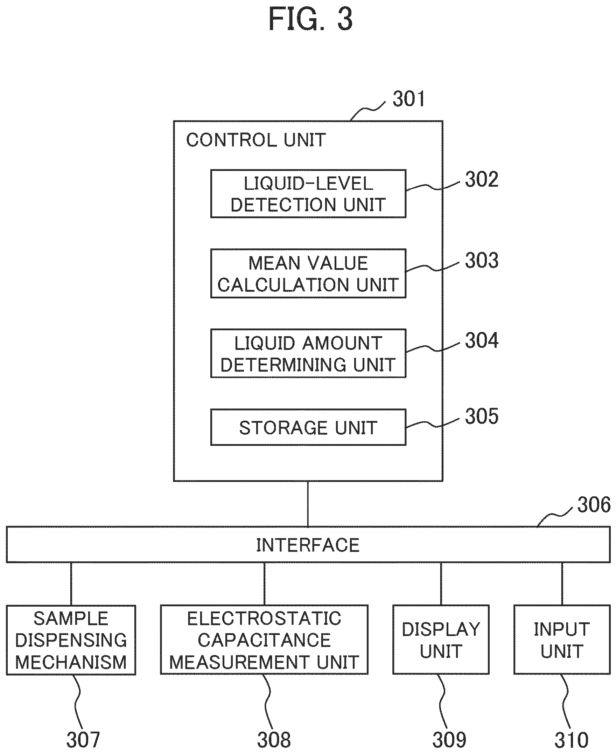

FIG. 3 is a functional block diagram of the automatic analyzer. It is noted that, in FIG. 3, the description of functionality except the calculation regarding the electrostatic capacitance is omitted.

FIG. 5 shows a schematic diagram of changes in mean value of the electrostatic capacitance after contact with liquid while the sample in the same vessel is aspirated equally in amount every time.

Experiment was carried out as follows.
1. A sample vessel was set in the device, and repeated measurements of the sample in the sample vessel in question were requested.
2. The dispensing probe repeatedly aspirated a certain amount of the liquid from the sample vessel and discharged the total amount of the aspirated liquid into the reaction vessel.
3. The electrostatic capacitances before and after the contact with liquid was repeatedly acquired and the relationship between the amount of the liquid in the vessel and the electrostatic capacitance was determined.

The measurement values are actually discrete points, but are shown as a continuous line because the figure is a schematic diagram.

First, the smaller the remaining amount of the liquid in the vessel, the smaller the mean value of the electrostatic capacitance. Further, when a sufficient amount of the liquid is in the sample vessel (1), the sample decreases in the cylindrical portion. When the amount of the liquid is gradually decreased to approach the hemispherical portion near the bottom of the vessel (2), even if the equal amount of the sample is aspirated, the amount of decrease in liquid level height is increased. In the hemispherical portion (3), the slope of decrease in mean value of the electrostatic capacitance becomes further salient. Therefore, even if the aspiration of the equal amount is repeated, as compared with when there is sufficient liquid, the way of a decrease in mean value of the electrostatic capacitance changes in accordance with a shape around the vessel bottom. For example, the amount of reduction in electrostatic capacitance in each aspiration becomes larger.

Analyzing a change in the way of decrease enables a detection that the amount of the sample is only near the vessel bottom, i.e., there is a possibility of insufficient sample.

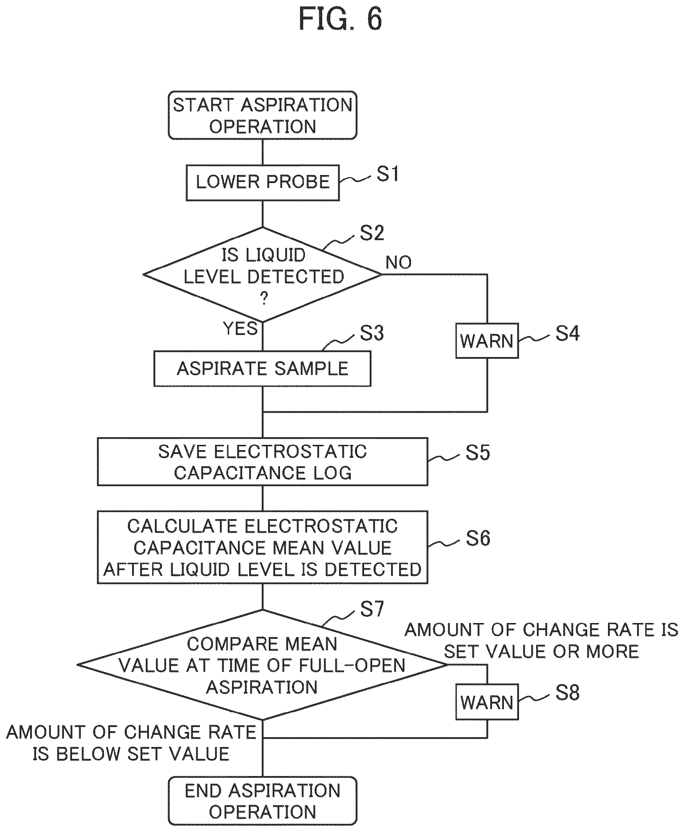

As one of analysis methods, FIG. 6 shows a flowchart of an example of comparing the mean value of electrostatic capacitance with a value at the previous aspiration.

As an aspiration operation of the dispensing mechanism, the probe is moved to above the sample vessel, and then a lowering operation is performed for aspiration (S1). In the case of the liquid-level detecting sensor of the electrostatic capacitance scheme, it is determined based on a change in electrostatic capacitance whether or not the probe contacts the liquid (S2). If the sensor detects the liquid level, the sample is aspirated as the probe in contact with the liquid (S3). If the sensor does not detect the liquid level, the probe does not perform the aspiration operation, and a warning is issued (S4).

Regardless of the performance of the sample aspiration, time-series data on the electrostatic capacitance from the start of lowering the probe to the completion of aspiration is stored as a log in the storage unit (S5).
Based on the stored log, a mean value of the electrostatic capacitance in a certain interval after the contact of the probe with liquid is calculated. (S6).

The calculated mean value of electrostatic capacitance is compared with a mean value of electrostatic capacitance at the previous aspiration of the same sample (S7).
A threshold value is set for a magnitude of the amount of change. Then, if the amount of change is at or above the set value, it is determined that the amount of decrease in electrostatic capacitance is large, i.e., the sample remains only in the vessel bottom, so that a warning that the remaining amount of the sample is low is notified (S8).

If the amount of change is below the set threshold value, it is determined that there is no large change in the downward trend of the electrostatic capacitance and thus a sufficient amount of the sample remains in the vessel. Then, the aspiration operation is terminated.

For comparison with the previous detection in step S7 in the figure, data on the immediately preceding contact with liquid level or mean data on a predetermined number of most recent contacts with liquid level may be used.

Also, a criterion value of the amount of change may be pre-stored in the storage unit.

The present invention is practicable for any type of sample vessels. However, for more accurate measurement of the remaining amount, a relationship table of values of electrostatic capacitance and remaining amounts for each type of vessel may be pre-created so that it is possible to refer to the table in question to calculate the remaining amount.

Further, the present invention is applicable even if a measurement object is any liquid other than a sample, for example, a reagent.
If the possibility of a sample shortage is detected, the effect can be notified to the user as an alarm.

Also, if the amount of the liquid in the vessel is identified from the electrostatic capacitance, the amount of the liquid in the vessel can be displayed on a screen of a device operation unit.

The display method may use a percentage indication even in the case of an absolute amount.

Whether or not the liquid is insufficient is determined from the comparison with the electrostatic capacitance in the most recent contacts with liquid. Because of this, the electrostatic capacitance for each contact with liquid is preferably stored as a log.

The data to be stored may be time-series data on the electrostatic capacitance or may be data processed using the time-series data in order to determine the remaining amount of the liquid.

Data to be used for determination may be on the amount of change in electrostatic capacitance obtained when the electrostatic capacitance detecting unit contacts the liquid level although it is not the electrostatic capacitance while the probe contacts the liquid in the vessel.

According to the present invention, it is possible to provide an automatic analyzer capable of determining the remaining amount of a sample without an addition of any component other than a liquid-level detecting sensor of the electrostatic capacitance scheme, for example, a camera for imaging a liquid level or the like.

### List of Reference Signs

- 100: automatic analyzer
- 101: transfer rack
- 102: sample vessel
- 104: incubator
- 105: reaction vessel
- 106: transfer mechanism
- 107: tip holding member
- 108: stirring mechanism
- 109: disposal hole
- 110: mounting position
- 111: reagent disk
- 112: cover
- 113: washing mechanism
- 114,: 115 probe
- 116: detecting unit
- 117: rack transfer line
- 118: reagent vessel
- 119: tip
- 120: housing unit
- 201: rotating shaft
- 202: arm
- 203: probe
- 204: probe tip end (electrostatic capacitance detecting unit)
- 205: electrode opposite to electrostatic capacitance detecting unit

## Claims

1. An automatic analyzer comprising:
a probe that aspirates a liquid in a vessel; and
an electrostatic capacitance measuring mechanism that measures an electrostatic capacitance across the probe and the liquid housed in the vessel,
wherein the automatic analyzer comprises a calculation unit that calculates an amount of the liquid based on an electrostatic capacitance value measured by the electrostatic capacitance measuring mechanism when the probe contacts the liquid housed in the vessel.

2. The automatic analyzer according to claim 1, comprising a storage unit that stores a relationship between the electrostatic capacitance value and the amount of the liquid in advance,
wherein the calculation unit calculates a liquid amount based on the relationship.

3. The automatic analyzer according to claim 2,
wherein the relationship between the electrostatic capacitance value stored in the storage unit and the amount of the liquid varies depending on a shape of the vessel.

4. The automatic analyzer according to claim 1,
wherein the calculation unit calculates the remaining amount of the liquid housed in the vessel based on a change in the electrostatic capacitance value measured by the electrostatic capacitance measuring mechanism at times of different aspirations when the probe contacts the liquid housed in the vessel.

5. The automatic analyzer according to claim 1,
wherein the calculation unit calculates a transition of the remaining amount of the liquid housed in the vessel based on a change in the electrostatic capacitance value measured by the electrostatic capacitance measuring mechanism at times of different aspirations when the probe contacts the liquid housed in the vessel.

6. The automatic analyzer according to claim 1, comprising a detection unit detecting that the remaining amount of the liquid housed in the vessel is small based on a slope of a change in the electrostatic capacitance value measured by the electrostatic capacitance measuring mechanism when the probe contacts the liquid housed in the vessel at times of different aspirations.

7. The automatic analyzer according to claim 6, comprising an informing mechanism informing that the detection unit detects that the remaining amount of the liquid is small.

8. The automatic analyzer according to claim 5, comprising a display unit that displays a remaining amount calculated by the calculation unit.
